# EUROPEAN PATENT APPLICATION

(11) **EP 4 773 105 A1**
(43) Date of publication of application: **08.07.2026**
(21) Application number: 24861337.4
(22) Date of filing: 17.10.2024
(51) Int. Cl.: G06V 20/64, G06V 10/82, G06T 17/20, G06V 20/17, G06V 20/10

(54) **INFORMATION PROCESSING METHOD, INFORMATION PROCESSING DEVICE, AND PROGRAM**

(71) Applicant: CalTa Inc., Minato-ku Tokyo 108-0074 (JP)
(72) Inventor: TAKAMIZAWA Takuya, Tokyo 108-0074 (JP)
(74) Representative: Hasegawa, Kan
(86) International application number: PCT/JP2024/036981
(87) International publication number: WO 2026/083544

(57) **Abstract**

The present disclosure provides a technique advantageous for assigning attribute information to a three-dimensional model. An information processing method for assigning attribute information to a three-dimensional model of an object, wherein a computer calculates an area size and a normal direction of each face of the three-dimensional model, determines a line-of-sight direction based on the calculated area size and normal direction, obtains an image of the three-dimensional model viewed from the line-of-sight direction, inputs the image viewed from the line-of-sight direction into a trained model that outputs attribute information from input images to obtain attribute information of the three-dimensional model, and assigns the attribute information to the three-dimensional model.

## Description

### [FIELD OF THE INVENTION]

The present disclosure relates to an information processing method, an information processing apparatus, and a program for assigning attribute information to a three-dimensional model.

### [BACKGROUND ART]

Conventionally, software, which inputs attribute information such as a window and a door into a three-dimensional model like BIM (Building Information Modeling) through user operation, has been used.

Patent Literature 1 discloses that a three-dimensional point cloud is generated using a plurality of images captured from the sky, and a texture map representing a three-dimensional shape of a roof is generated based on the generated three-dimensional point cloud. Additionally, Patent Literature 1 discloses using artificial intelligence to classify roof features present in images, performing a coloring process where different roof structural features are uniquely colored, applying a color classification label corresponding to the roof structural feature to the point cloud, and indicating the specific roof structural feature in specific color.

### [PRIOR ART LITERATURE]

### [PATENT LITERATURE]

Patent Literature 1: Japanese Patent Application Publication (Translation of PCT Application) No. 2023-505212

### [SUMMARY OF THE INVENTION]

### [TECHNICAL PROBLEM]

It is laborious and costly to input attribute information to a large number of 3D models due to the user's operation in the software, and input errors may occur. Further, there is a method of classifying roofs using artificial intelligence as described in Patent Literature 1, but for a wide variety of three-dimensional models, it is difficult to extract detailed attribute information other than the roof with higher accuracy, and there is a possibility of erroneous output.

Therefore, a purpose of the present disclosure is to provide a technique advantageous for assigning attribute information to a three-dimensional model.

### [TECHNICAL SOLUTION]

The information processing method as an aspect of the present disclosure for solving the above problem is an information processing method for assigning attribute information to a three-dimensional model of an object, wherein a computer calculates area size and normal direction of each face of the three-dimensional model; determines a line-of-sight direction based on the calculated area size and normal direction; acquires an image of the three-dimensional model viewed from the line-of-sight direction; inputs the image viewed from the line-of-sight direction into a trained model that outputs attribute information from input images to obtain attribute information of the three-dimensional model; and assigns the attribute information to the three-dimensional model.

### [ADVANTAGEOUS EFFECT]

According to the present disclosure, a technique advantageous for assigning attribute information to the three-dimensional model can be provided.

### [BRIEF DESCRIPTION OF THE DRAWINGS]

[FIG. 1] A figure showing a configuration of an information processing apparatus.
[FIG. 2] A figure showing a flowchart of an information processing method.
[FIG. 3] A figure representing the TIN model.
[FIG. 4] A figure representing a normal vector.
[FIG. 5] A figure representing each angular range of the normal vector.
[FIG. 6] A figure showing a concept of peaks of weight.
[FIG. 7] A figure showing a three-dimensional model of a building.
[FIG. 8] A figure representing a bounding box, line of sight and viewpoint.
[FIG. 9] A figure representing a two-dimensional image of a three-dimensional model viewed from the line-of-sight direction.
[FIG. 10] A figure representing a two-dimensional image of the three-dimensional model viewed from the second line-of-sight direction.
[FIG. 11] A figure representing an image of a three-dimensional model viewed from the direction of the upper face side of a bounding box in a comparative example.
[FIG. 12] A figure representing an image of the three-dimensional model viewed from the direction of the lower face side of the bounding box in the comparative example.

### [DESCRIPTION OF EMBODIMENT]

Embodiments of the present disclosure include, for example, the following configurations.

### [Item 1]

An information processing method for assigning attribute information to a three-dimensional model of an object,
wherein a computer
calculates an area size and normal direction of each face of the three-dimensional model;
determines a line-of-sight direction based on the calculated area size and normal direction;
acquires an image of the three-dimensional model viewed from the line-of-sight direction;
inputs the image viewed from the line-of-sight direction into a trained model that outputs attribute information from input images to obtain attribute information of the three-dimensional model; and
assigns the attribute information to the three-dimensional model.

### [Item 2]

The information processing method according to item 1, wherein the method comprises determining the line-of-sight direction based on a direction of a first component vector, which is a normal vector corresponding to a face having the largest total area size among faces of the three-dimensional model, wherein the total area size is calculated by summing up the area size for each face of the three-dimensional model by faces oriented in the same direction range.

### [Item 3]

The information processing method according to item 1, wherein the method comprises determining a direction along the first component vector starting from a center of the three-dimensional model as the line-of-sight direction.

### [Item 4]

The information processing method according to item 1, wherein the method comprises determining a plurality of line-of-sight directions, inputting a plurality of images viewed from a plurality of line-of-sight directions into the trained model, and obtaining attribute information corresponding to the plurality of images.

### [Item 5]

The information processing method according to item 1, wherein the method comprises superimposing the three-dimensional model of the object on geospatial information and obtaining the attribute information from the image of the three-dimensional model including the geospatial information, the image being viewed from the line-of-sight direction.

### [Item 6]

A program for causing a computer to execute the information processing method according to any one of items 1 to 5.

### [Item 7]

An information processing apparatus for assigning attribute information to a three-dimensional model of an object, the apparatus comprising a processing unit,
wherein the processing unit is configured to:
calculate an area size and normal direction of each face of the three-dimensional model;
determine a line-of-sight direction based on the calculated area size and normal direction;
acquire an image of the three-dimensional model viewed from the line-of-sight direction;
input the image viewed from the line-of-sight direction into a trained model that outputs attribute information from input images to obtain attribute information of the three-dimensional model; and
assign the attribute information to the three-dimensional model.

Preferred embodiments of the present disclosure will be described in detail below, with reference to the accompanying drawings. In addition, in the present specification and the drawings, duplicate descriptions are omitted for components having substantially the same functional configuration by attaching the same reference numerals.

### <Details of Embodiment>

In the present embodiment, a technique for assigning attribute information to an object represented by three-dimensional data such as a three-dimensional (3D) model or a three-dimensional point cloud will be described. Examples of the object include a detached house, an apartment, a condominium, a high-rise building, a store, a commercial facility and a factory as a building, a road, a traffic facility, a bridge, a dam, a wind power generation facility, a transmission tower, a communication tower and an agricultural facility as a structure object, and a topographic feature, a forest and an agricultural land (a field, a rice paddy, and an orchard) as a natural object, but is not limited thereto. Attribute information, unlike a shape and position of the object itself, provides descriptive data and features about the object and is used to better understand, identify, classify, and analyze the object, and can include various properties and states that are directly or indirectly related to the object. Examples of assigning attribute information to three-dimensional data include, but are not limited to, the following. The attribute information of each component such as a wall, a window, a door, an entrance, a balcony, a roof, a chimney, an antenna, an air conditioning equipment, a deck, a column, a beam, and a solar panel is added to data of the building. This information includes the type of material (reinforced concrete, wood, etc.), strength, height, year of installation, number of floors, etc. It also includes gardens, pools, barns, and patios attached to the building. As a result, these are used for structural analysis, maintenance planning and urban planning of the building, etc. In addition, geological attributes (type of formation, soil intensity, location of groundwater, etc.) are assigned to data of the topographic feature. As a result, these are used for civil engineering work and disaster risk assessment. Information such as a plant, tree species, height, and health status are assigned to data of the forest. This makes it easier to manage the forest and monitor the health of vegetation. As shown in these examples, by adding attribute information, the three-dimensional data has more meaning and is used as more useful information.

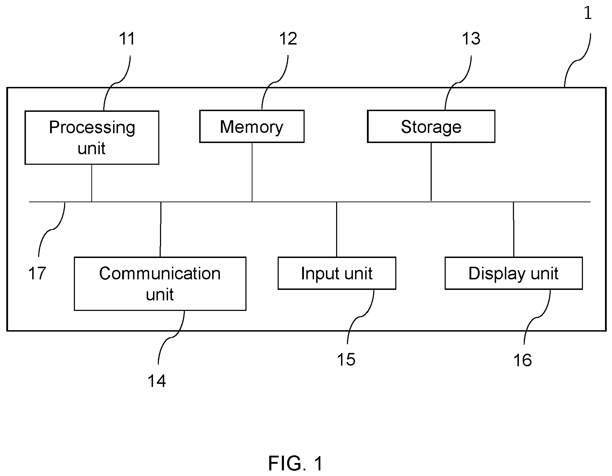

FIG. 1 shows a configuration figure of an information processing apparatus 1 in the present embodiment. The information processing apparatus 1 includes a computer provided in a device such as a personal computer that is a general-purpose computer and a smartphone or tablet. The information processing apparatus 1 executes an information processing method for assigning attribute information to an object represented by three-dimensional data by installed software or an installed application (program).

The information processing apparatus 1 includes a processing unit 11, a memory 12, a storage unit 13, a communication unit 14, an input unit 15, and a display unit 16. These are electrically connected to each other through a bus 17.

The processing unit 11 is an arithmetic device that controls an operation of the entire information processing apparatus 1, controls the transmission / reception of data between each unit, and performs information processing necessary for program execution and authentication processing. The processing unit 11 includes, for example, an arithmetic processing unit that is a processor such as a CPU, GPU or FPGA, and executes a program stored in the storage 13 and deployed in the memory 12 to execute various information processes described below.

The memory 12 (storage unit) includes a main memory composed of a volatile storage device such as DRAM and an auxiliary memory composed of a non-volatile storage device such as a flash memory or HDD. The memory 12 is used as a work area of the processing unit 11 and stores the BIOS and various setting information executed at startup of the information processing unit 1.

The storage 13 (storage medium) includes storage devices such as HDD and SSD, and stores various programs such as an application and a program. Further, a database storing data used for each process is constructed in the storage 13.

The communication unit 14 connects the information processing apparatus 1 to the network. The communication unit 14 communicates with an external device directly or via a network access point, for example, by a method such as wired LAN, wireless LAN, Wi-Fi (Wireless Fidelity; registered trademark), infrared communication, Bluetooth (registered trademark), short-distance or non-contact communication. The input unit 15 is, for example, an information input device such as a keyboard, a mouse, and a touch panel.

The display unit (display device) 16 includes a display that displays information obtained and calculated by the processing unit 11 or information received by the communication unit 14 from an outside unit. The display unit 16 provides a graphical user interface (GUI) for displaying various information on its screen. The display unit 16 is not limited to the one provided integrated with the information processing apparatus 1, but may be a display (display device) provided separately from the information processing apparatus 1 and connected to the information processing apparatus 1.

The bus 17 is commonly connected to each of the above component elements, and transmits an address signal, a data signal, and various control signals, for example.

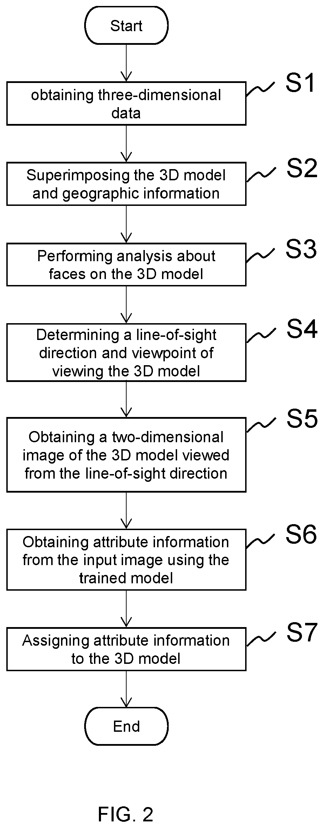

Next, an information processing method for assigning attribute information to the object represented by three-dimensional data will be described. FIG. 2 shows a flowchart of the method.

First, the information processing apparatus 1 obtains three-dimensional data for assigning attribute information and generates a three-dimensional model (S1). The three-dimensional data include, for example, three-dimensional point cloud data in which each point cloud indicates three-dimensional coordinate. In order to generate these three-dimensional data, some methods can be mentioned wherein the methods include a measurement method by a laser scanning such as LiDAR, a method of calculating three-dimensional data from a plurality of images or a video captured from a plurality of different angles such as Structure from Motion (SfM), a method of projecting patterned light (such as a striped pattern) on an object and capturing a distortion when the light is reflected on the object with a camera to obtain a three-dimensional shape, and a method of calculating a distance by irradiating an object with light and measuring a time until the light is reflected by the object and returned.

Hereinafter, as an example, a method by SfM is described. First, an object is captured using a camera (imaging device) of a moving object (moving device) such as a drone and image data is obtained. The camera of the moving object captures the object from various angles. Image capturing may be performed by video recording using the camera of the moving object, or capturing of a plurality of still images. In addition, if a certain distance is kept between the object and the camera at image capturing, the three-dimensional (3D) information is reconstructed more accurately.

Further, the image capturing may be performed by the moving object moving autonomously, by automatically moving the moving object by a control device, or by controlling a position and posture of the moving object by a person operating a control device. When moving the moving object automatically, the control device sets a waypoint including a point on a path where the moving body moves, and controls a position of the moving object so that the moving object moves according to the waypoint. The control device transmits the waypoint of the moving object to the moving object as a target position, and performs position control with respect to the moving object, for example, according to a difference between the target position and the measured current position. In addition, the control device can also control an imaging condition such as a posture (angle, direction), focus position, brightness, and sensitivity of the camera of the moving object at the time of video recording.

The image data captured by the camera of the moving object is transmitted to an information processing device (computer) that executes SfM. Note that if necessary, preprocessing can be performed on the image obtained by capturing before inputting data to an SfM algorithm. For example, removing an unneeded image or adjusting brightness and contrast of an image is performed.

Next, the information processing apparatus for executing SfM executes SfM using a plurality of captured images or preprocessed images. First, the apparatus detects a feature point of the image using a plurality of images. The feature point is a point which is unique in an image and easy to match from different perspectives, for example, a part that corresponds to an edge or a corner of an object. SIFT (Scale-Invariant Feature Transform) and SURF (Speeded Up Robust Features) are known as common algorithms.

Next, the feature points detected from each image are corresponded between the plurality of images. The apparatus matches common points in images captured from different perspectives to identify which parts of which images represent the same point. Feature-based methods (e.g., feature descriptors such as SIFT and SURF) and nearest neighbor search algorithms are used for the matching.

Then, the apparatus estimates, from position information (two-dimensional coordinates) of the feature points matched by the two images, a position and posture (angle, orientation) of the camera when each image is captured. For example, using a mathematical model called epipolar geometry, the apparatus integrates information from multiple viewpoints to calculate a relative position and orientation of cameras based on parallax. The apparatus calculates fundamental matrix or essential matrix to estimate the relative position and posture between cameras. Alternatively, the apparatus estimates the position and posture of the camera with Al such as Gaussian Splatting. In this way, the apparatus determines the position and posture of the camera in the three-dimensional space, and a storage unit such as a database can store correspondence between the image and the position and posture of the camera when the image is captured.

In addition, the apparatus constructs a three-dimensional point cloud using feature points matched at each viewpoint. Specifically, based on the estimated position and posture of the camera, the apparatus calculates the coordinates of the corresponding three-dimensional point from the coordinates of the two-dimensional feature points that coincide between the plurality of images. This process is a method based on triangulation. By this method, it is determined where the features of the object reflected in the two-dimensional image are located in the three-dimensional space. A three-dimensional point cloud is represented by three-dimensional coordinates, where each point represents a position corresponding to a position of a surface of the object. Thereby, the rough shape of the object can be grasped. If necessary, the apparatus performs bundled adjustment for adjusting all of the positions of cameras and the three-dimensional point clouds at the same time and making to minimize error, thereby the apparatus can obtain a more accurate camera position and three-dimensional point cloud.

Since the three-dimensional point cloud obtained at this stage is coarse data about density, it is necessary to find more corresponding points and add them in order to obtain a dense point cloud. For this, algorithms such as stereo matching, optical flow, etc. can be used. In the stereo matching, dense point clouds are generated by finding corresponding points for each pixel using two or more image pairs. In the optical flow, more detailed point clouds are generated by calculating pixel movement between temporally sequential images. In addition, a dense three-dimensional point cloud can be obtained using a method called Patch-based Multi-view Stereo (PMVS), which estimates a position of each point using pixel information of an image, and so on. Also, if the point cloud contains noise such as outliers, optimization can be performed after removing noise.

Since the position of the camera and the three-dimensional point cloud calculated by SfM are estimated relatively, there is a method of using external scale information (e.g., a dimension of a known object, GPS data) in order to obtain actual size and distance. For example, when imaging an object, a known survey point or target is set up in advance at a place for imaging, and a coordinate value of the known survey point or target is added and fitted after the SfM is completed. Alternatively, by arranging a target such as an AR marker that can show arbitrary coordinates in the image data during SfM processing, and giving a coordinate value of the target at the time of SfM processing and fitting, the output of SfM processing may be expressed in a real coordinate system.

Next, the information processing apparatus 1 generates a three-dimensional model (3D model) by connecting points based on the constructed point cloud data. Modeling is the step of turning a 3D point cloud into a polygon to smoothly represent shapes, so that the detailed shape of the object is more clearly visible. The 3D model is composed of, for example, a TIN (Triangular Irregular Network) model. The TIN model is a model composed of faces of a plurality of triangular plane figures connected to each other without intersecting, wherein the triangular plane figure connecting three points that are close to each other in the obtained three-dimensional point cloud, and is a digital data structure that expresses three-dimensional data as a set of triangles. Surface shape of the TIN model represents surface shape of the measured object. Alternatively, the 3D model may be a model represented by a two-dimensional polygon figure such as a rectangle, or a model represented by a mesh of vertices, sides (edges), and faces (polygons).

The three-dimensional point cloud and 3D model obtained as described above are output in various formats.

Next, the processing unit of the information processing apparatus 1 superimposes the obtained 3D model or three-dimensional point cloud data and an image representing two-dimensional geographic information (S2). The geographic information includes map information and various statistical information, and is obtained from a geographic information system GIS (Geographic Information System) that handles data having various information about location on an electronic map. Superposition of S2 is not necessarily required to be performed when geographic information cannot be obtained or when it is not necessary for attribute information assignment, etc.

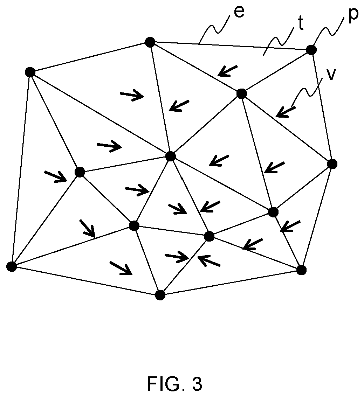

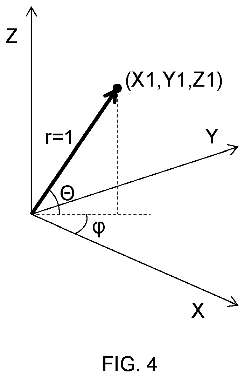

Next, the processing unit of the information processing apparatus 1 performs analysis about faces on the obtained 3D model (S3). The 3D model is represented, for example, by a TIN model. The TIN model consists of a set of faces with a large number of triangular planes adjacent to each other, and each triangle has its own area size and face orientation. FIG. 3 shows a figure showing a part of the TIN model. The TIN model is represented by a set of triangles t in which each point p of the three-dimensional point cloud is connected by a line (side) e. **In** S3, first, the processing unit calculates area size of each triangle constituting the model and normal vector v perpendicular to the plane of each triangle using the data of the model. The area size and normal vector can be calculated using coordinates of the three vertices of the triangle. Here, the normal vector is represented by a vector having a three-dimensional component, and is a unit vector having a magnitude r of 1. FIG. 4 shows a figure of a coordinate representation of a normal vector. The normal vector can be represented by coordinates of a three-dimensional Cartesian coordinate system (X1, Y1, Z1) or by spherical coordinates of azimuth angle φ and elevation angle Θ. Orientation of the normal vector can be set to a direction facing outward of the 3D model.

For each triangle plane, the processing unit of the information processing apparatus 1 assigns size of the area to the calculated normal vector as weight information. For example, a normal vector of a triangle t1 and area size of the triangle t1 are associated with data as a set of sets, and a normal vector of another triangle t2 and area size of the triangle t2 are associated with a set of data and these data are stored.

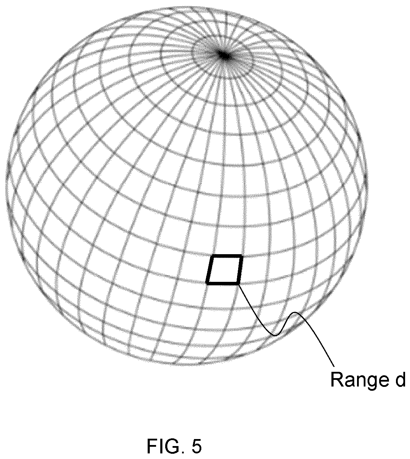

Then, the processing unit statistically processes the weights of a plurality of normal vectors. In statistical processing, for each of ranges obtained by dividing three-dimensional space at regular intervals, the processing unit obtains total (sum) of the magnitudes of the weights of the normal vectors included in each range. As shown in FIG. 5, each range can be set as a range in which each of the azimuth and elevation angles is divided by a range d of regular intervals, such as a range in which a surface of a sphere of radius 1 is divided by regular angular intervals. For example, the azimuth angle is divided into 360 equal parts to a range between 0 degrees or more and less than 1 degree, a range between 1 degree or more and less than 2 degrees, ..., a range between 359 degrees or more and less than 360 degrees, and the elevation angle is similarly divided into 360 equal parts, and the processing unit can set ranges obtained by dividing the azimuth angle and elevation angle by 1 degree interval. Alternatively, angles can be rounded to integers by rounding to the first decimal place. That is, the range of from 0 to less than 0.5 degrees can be set to 0, the range from 0.5 to less than 1.5 degrees can be set to 1. The angle is expressed as a degree, but may also be in radians. Further, each range can be set within the range of each regular interval of the X, Y, and Z coordinates of the three-dimensional Cartesian coordinate system so as to cover the surface of the sphere of radius 1. The sum of the magnitudes of the weights in each range represents the magnitude of the area of the sum of the faces of the triangle with normal vectors included in the range.

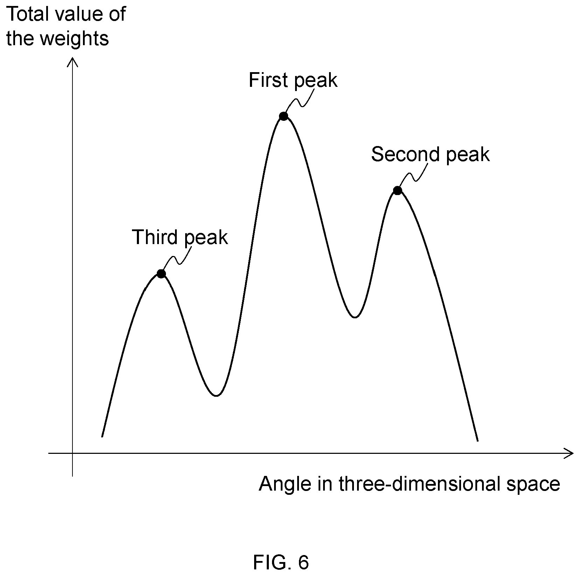

The processing unit of the information processing apparatus 1 can calculate statistical values such as a range in which the sum of the weights has a maximum value, a range in which the sum of the weights indicates a peak, an average value, a variance value, and a deviation by statistical processing of the weights. The peak is a location having a local maximum value in a local range, and may be either a point where a value actually exists, an interpolated point from discrete points at which values actually exist, or a peak on curves approximating discrete points. FIG. 6 shows a figure showing a concept of the peak. The horizontal axis of FIG. 6 is the angle of the azimuth angle and elevation angle in three-dimensional space, and the vertical axis of FIG. 6 is the total value of the weights. FIG. 6 is two-dimensional, but the horizontal axis conceptually represents an angle in three-dimensional space. The component having the largest peak value (maximum value) can be named a first peak, the component with the second-largest peak value can be named a second peak, and the first peak, the second peak, and a third peak can be named in order from the highest peak value. A normal vector of an angle corresponding to the first peak can be called a first component vector, a normal vector of an angle corresponding to the second peak can be called a second component vector, and a normal vector of an angle corresponding to the third peak can be called a third component vector. In case that two peaks are close to each other and have a width over a certain range, an average value or median in the range can be set as the peak position.

For example, in case that the weight sum value has the largest first peak in the range of the azimuth angle θ 12-13 degrees and the elevation angle φ 0-1 degrees, the minimum value, maximum value, average value, median value of the angle in that range, etc. Then, the first component vector having the determined representative azimuth and elevation angles is determined. In case that the angle is expressed as an integer by rounding to the first decimal place, the angle of the integer means the representative value.

The first peak represents that total area size of some triangles on faces of the TIN model is the largest, wherein the total area size being sum of areas of triangles on the faces whose normal directions are oriented in the direction of the angular range corresponding to the first peak. Therefore, by extracting the first peak, it is possible to specify which direction a face is facing that have the largest area size among the faces constituting the three-dimensional model. The first component vector is a normal vector corresponding to a face with the largest total area size, wherein the total area size being sum of area on the faces facing in the same direction or the same range of directions for each face of the three-dimensional model.

Further, the second peak represents that area size of sum of some triangles in which the normal direction is directed in a direction of an angular range corresponding to the second peak other than the first peak region is the second largest local maximum. Therefore, by extracting the second peak, it is possible to specify which direction a face is facing that have area size of the second largest local maximum among the faces constituting the three-dimensional model. **In** this way, by performing statistical processing using area size of each face of the three-dimensional model as a weight, the direction and size of the faces of the three-dimensional model can be analyzed.

The processing unit of the information processing apparatus 1 determines a line-of-sight direction and viewpoint of viewing the three-dimensional model based on the statistical value of the result of statistically processing the weights (S4). The line-of-sight direction can be determined so that attribute information can be correctly obtained when obtaining attribute information in S6. The line-of-sight direction is set in the direction in which the three-dimensional data is viewed from the outside, that is, in the direction from the outside to the center of the object. The line-of-sight direction can be determined, for example, based on the direction of the first component vector. As an example, the line-of-sight direction can be the opposite direction of the first component vector with starting point as the center position of the three-dimensional model. The center position of the three-dimensional model can be obtained as the center position of the rectangular parallelepiped (bounding box) surrounding the three-dimensional model. Thus, the direction along the first component vector starting from the center of the three-dimensional model can be determined as the line-of-sight direction.

The position of the viewpoint from which the line of sight originates may be any position outside the bounding box surrounding the three-dimensional model, for example, preferably may be at a distance where the entire three-dimensional model is included within the viewing angle and close to the three-dimensional model when obtaining an image of S5.

Note that the line-of-sight direction is not limited to the opposite direction of the first component vector if the attribute information can be correctly obtained when obtaining attribute information in S6, and may be a direction deviated from the opposite direction. Tolerance range of the deviation can be determined to the extent that the face corresponding to the first component vector among the faces constituting the three-dimensional model is included in the image when obtaining a two-dimensional image of the three-dimensional model. This is because the face corresponding to the first component vector occupies the largest surface area size in the three-dimensional model and is easy to represent features and attributes of the three-dimensional model.

The line-of-sight direction may also be determined based on the second component vector or the third component vector. For example, the line-of-sight direction can be the opposite direction of the second component vector or the third component vector with the starting point as the center position of the three-dimensional model. Further, the line-of-sight direction may be set as a plurality of directions.

It is preferable to set the line-of-sight direction so that the viewpoint is above the center of the three-dimensional model (object). This is because three-dimensional data is often calculated from images viewed from the sky, the upper side in vertical direction, and in case that the viewpoint is below the center, the image viewed from the viewpoint has little information, and an image with insufficient information is likely to occur.

Next, the apparatus obtains a two-dimensional image of the three-dimensional model viewed from the determined viewpoint and the line-of-sight direction (S5). A two-dimensional image can be obtained by placing a plane perpendicular to the line-of-sight direction between the viewpoint and the three-dimensional model and projecting an image of the three-dimensional model on the plane.

Next, the apparatus obtains attribute information of the three-dimensional model (object) from the two-dimensional image of the three-dimensional model viewed from the line-of-sight direction using a trained model that outputs attribute information from the input image (S6). The trained model that outputs the attribute information from the input image is a model mechanically trained using a large number of two-dimensional images and a large number of attribute information as training data, and artificial intelligence (AI) such as a large-scale neural network. The trained model may be configured in the information processing apparatus 1, or may be provided by an external computer separate from the information processing apparatus 1. The external computer can be in the form of a server or a public cloud. In S6, when a two-dimensional image obtained in S5 is input to a trained model that outputs the attribute information from the input image, the trained model outputs attribute information such as something included in the image. The output can be a description of the image or in a form of a keyword.

In case that a plurality of line-of-sight directions are set, the apparatus obtains a plurality of images viewed from each line-of-sight direction, and inputs the plurality of images to the trained model. The trained model outputs attribute information corresponding to each image, all the output attribute information may be as attribute information of the object, and only the attribute information common to each image among the output attribute information may be determined as attribute information of the object.

Next, the apparatus assigns attribute information output from the trained model to the three-dimensional model (object) (S7). As a method of assigning attribute information, for example, there is a method of tagging the three-dimensional model and linking with a database. Each part of the three-dimensional model corresponding to each attribute information can be tagged with attribute information and stored in a database or file format. For example, attribute data can be directly linked to each part of the three-dimensional model. File formats include IFC format for BIM data and Shapefile for GIS. In cooperation with the database, it is possible to store attribute data related to 3D data in a separate database and recall the attribute data when a specific part of the 3D data is selected.

### (Embodiment 1)

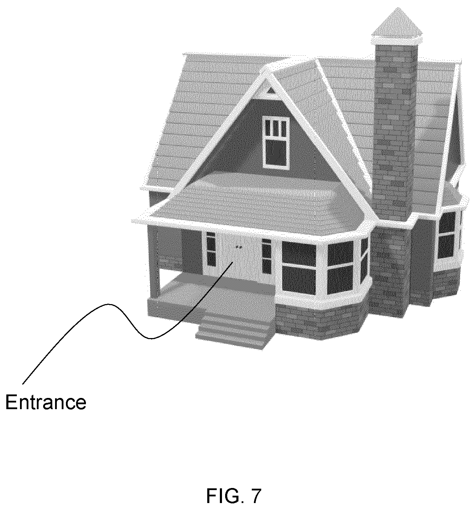

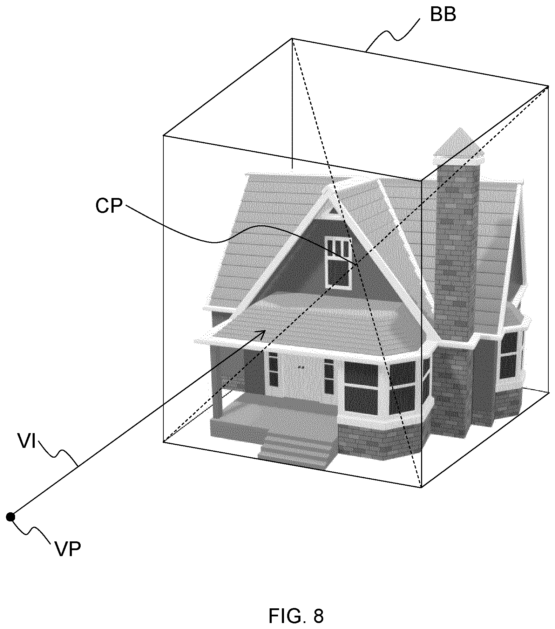

As an example of the three-dimensional model, FIG. 7 shows a figure of a three-dimensional model of a building. In S3, when surface analysis of the three-dimensional model is performed, it is calculated that area size of faces having a normal direction in the same angular range as a normal direction of a face of an entrance shown in FIG. 7 is the largest. Therefore, the first component vector of the same angle range as the normal direction of the entrance face starting from the center position of the three-dimensional model is obtained, and the opposite direction of the first component vector is determined as the line-of-sight direction. FIG. 8 shows a solid line of a rectangular parallelepiped (bounding box) BB that touches and surrounds the three-dimensional model. The opposite direction of the first component vector starting from the center position CP of the rectangular parallelepiped (bounding box) BB is the line-of-sight direction VI. The viewpoint VP can be determined so that the three-dimensional model of the building is included within the angle of view.

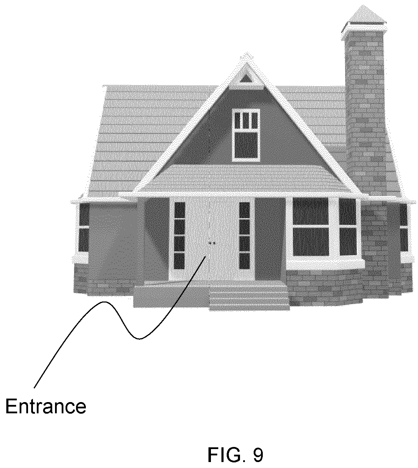

FIG. 9 shows a two-dimensional image of the three-dimensional model viewed from the determined line-of-sight direction VI and viewpoint VP. The image of FIG. 9 includes facade including the entrance of the building. Then, the image of FIG. 9 is input to the trained model to obtain attribute information of the three-dimensional model. The trained model to which the image of FIG. 9 is input outputs white entrance, window, chimney, blue exterior wall, brown roof, and staircase as attribute information.

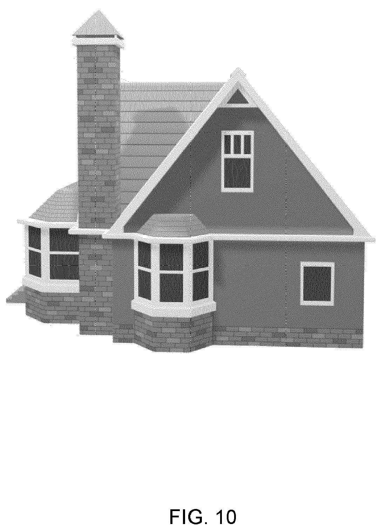

FIG. 10 shows a two-dimensional image of the three-dimensional model viewed from the line-of-sight direction in case that the opposite direction of the second component vector starting from the center position CP of the rectangular parallelepiped BB is the line-of-sight direction. The trained model to which the image of FIG. 10 is input outputs a window, a chimney, a blue exterior wall, and a brown roof as attribute information.

As in the above example, comparing attribute information obtained from the image of the three-dimensional model viewed from the line-of-sight direction determined based on the first component vector and attribute information obtained from the image of the three-dimensional model viewed from the line-of-sight direction determined based on the second component vector, the first component vector yields more attribute information and more accurately represents the three-dimensional model. Therefore, obtaining attribute information only from images of the three-dimensional model viewed from the line-of-sight direction determined based on the first component vector can yield correct attribute information with less computational load and shorter time compared to obtaining attribute information from two-dimensional images of the three-dimensional model viewed from each of a plurality of line-of-sight directions.

As described above, according to the above embodiment, by using the trained model that outputs the attribute information from the input image, time and cost of inputting attribute information to a large number of three-dimensional models by user operation in the software can be reduced, and input errors can be suppressed. Further, in the above embodiment, images that can more accurately determine attribute information can be obtained by analyzing the faces of the three-dimensional model, and determining the line-of-sight direction for viewing the three-dimensional model based on the analysis result by the analysis, and obtaining a two-dimensional image of the three-dimensional model viewed from the determined line-of-sight direction. By doing so, even if artificial intelligence and a trained model that outputs attribute information from input images are used for a wide variety of three-dimensional models, the possibility of outputting incorrect attribute information is reduced, and attribute information can be obtained more accurately. Therefore, correct attribute information can be added to a wide variety of three-dimensional data more easily, and new data utilization methods can be created to improve the efficiency of operations using data.

For example, in addition to information such as height and a roof of the building, attributes such as a window and a door and information on a position of the window and the door can be assigned to the three-dimensional model of the building, and the information can be used for building maintenance, drone delivery service, autonomous driving service, and architectural planning consideration.

### (Comparative embodiment)

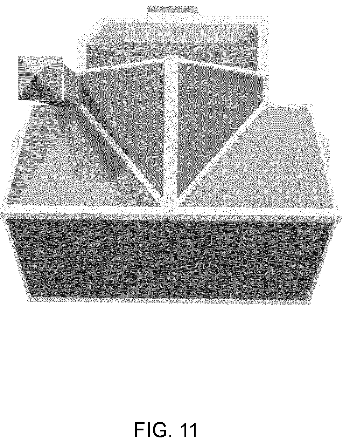

Next, a comparative embodiment will be described. **In** the comparative embodiment, an example in which the line-of-sight direction for viewing the three-dimensional model of the building of FIG. 7 is determined based on the normal direction of the face of the rectangular parallelepiped BB that touches and surrounds the three-dimensional model will be described. There are six faces of the rectangular parallelepiped BB, and the normal direction of the six faces, that is, six directions of up and down, left and right, front and back, can be set as the line-of-sight direction. In case that the line-of-sight direction is the opposite direction of the outward normal vector on the upper surface of the rectangular parallelepiped BB starting from the center position CP of the rectangular parallelepiped BB, the image of the three-dimensional model viewed from the viewpoint at a certain distance is as shown in FIG. 11. When the image of FIG. 11 is input to the trained model and the attribute information of the three-dimensional model is obtained, a brown roof and a chimney are output, but a window, an entrance, an exterior wall, and a stair are not output because they do not exist in the image.

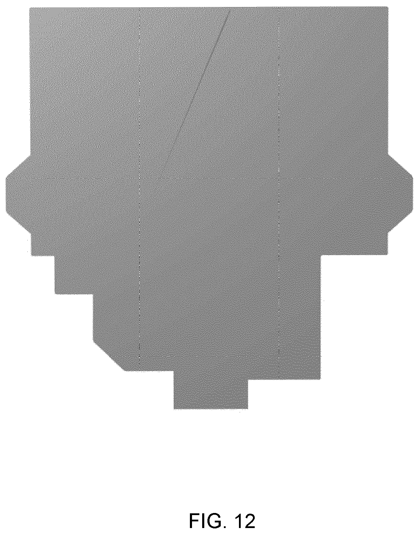

In case that the line-of-sight direction is the opposite direction of the outward normal vector of the lower surface of the rectangular parallelepiped BB starting from the center position CP of the rectangular parallelepiped BB, the image of the three-dimensional model viewed from the viewpoint at a certain distance is as shown in FIG. 12. **In** the image of FIG. 12, shape of the bottom of the building can be recognized, but the image is insufficient information since there is no actual measurement data. When the image of FIG. 12 is input to the trained model, information of the building is output, but the attribute information related to the detailed building component is not output.

As another example, in case that the object of the three-dimensional data has an inclined surface such as a slope, when a bounding box is set for the object, the object viewed from the side of the bounding box will be viewed from the back side of the slope. Thus, since there can be a wide variety of objects in three-dimensional data, when a bounding box is set for the object and the line-of-sight direction is set based on a face of the bounding box, the image viewed from the line-of-sight direction may be an image from which attribute information cannot be obtained correctly. If the line-of-sight direction is not set appropriately, appropriate attribute information cannot be obtained even if the image of the three-dimensional model is input to the above trained model.

Although preferred embodiments of the present disclosure have been described in detail with reference to the accompanying drawings, the technical scope of the present disclosure is not limited to such examples. Also, not all of the components shown in the embodiments are essential components of the present disclosure. The features shown in each embodiment are also applicable to other embodiments as long as they do not contradict each other.

The information processing apparatus 1 may be configured not only of one apparatus but also of a plurality of distributed information processing devices, or may be configured as a virtual server or container of a cloud.

In case that superimposing a 3D model with an image representing two-dimensional geographic information, the image viewed from the line-of-sight direction determined in S4 includes two-dimensional geographic information. Therefore, when the image is input to the aforementioned trained model, attribute information related to two-dimensional geographic information is output. For example, in the example of a three-dimensional model of a building that can be found to be close to the coastline from geographic information, attribute information of a building in the coastal area can be obtained. Thus, by superimposing a three-dimensional model of an object on geospatial information, attribute information can be obtained from an image of a three-dimensional model including geospatial information as viewed from the determined line-of-sight direction.

### [INDUSTRIAL APPLICABILITY]

The present disclosure relates to an information processing method, information processing apparatus, and program for assigning attribute information to a three-dimensional model, and has industrial applicability.

### [REFERENCE SIGNS LIST]

1 Information processing apparatus

## Claims

1. An information processing method for assigning attribute information to a three-dimensional model of an object,
wherein a computer
calculates an area size and a normal direction of each face of the three-dimensional model,
determines a line-of-sight direction based on the calculated area size and normal direction,
obtains an image of the three-dimensional model viewed from the line-of-sight direction,
inputs the image viewed from the line-of-sight direction into a trained model that outputs attribute information from input images to obtain attribute information of the three-dimensional model, and
assigns the attribute information to the three-dimensional model.

2. The information processing method according to claim 1, wherein the method comprises determining the line-of-sight direction based on a direction of a first component vector, which is a normal vector corresponding to a face having the largest total area size among faces of the three-dimensional model, wherein the total area size is calculated by summing up the area size for each face of the three-dimensional model by faces oriented in the same direction range.

3. The information processing method according to claim 1, wherein the method comprises determining a direction along the first component vector starting from a center of the three-dimensional model as the line-of-sight direction.

4. The information processing method according to claim 1, wherein the method comprises determining a plurality of line-of-sight directions, inputting a plurality of images viewed from a plurality of line-of-sight directions into the trained model, and obtaining attribute information corresponding to the plurality of images.

5. The information processing method according to claim 1, wherein the method comprises superimposing the three-dimensional model of the object on geospatial information and obtaining the attribute information from the image of the three-dimensional model including the geospatial information, the image being viewed from the line-of-sight direction.

6. A program for causing a computer to execute the information processing method according to any one of claims 1 to 5.

7. An information processing apparatus for assigning attribute information to a three-dimensional model of an object, the apparatus comprising a processing unit,
wherein the processing unit is configured to
calculate an area size and a normal direction of each face of the three-dimensional model,
determine a line-of-sight direction based on the calculated area size and normal direction,
obtain an image of the three-dimensional model viewed from the line-of-sight direction,
input the image viewed from the line-of-sight direction into a trained model that outputs attribute information from input images to obtain attribute information of the three-dimensional model, and
assign the attribute information to the three-dimensional model.
